(19) Europäisches Patentamt
European Patent Office
Office européen des brevets

(11) **EP 1 709 131 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **04765321.7**

(22) Anmeldetag: **17.09.2004**

(51) Int Cl.:
*C09J 5/06* (2006.01)   *H05B 6/80* (2006.01)

(86) Internationale Anmeldenummer:
**PCT/EP2004/010424**

(87) Internationale Veröffentlichungsnummer:
**WO 2005/073329 (11.08.2005 Gazette 2005/32)**

(54) **INTERFERENZFREIE MIKROWELLEN-BESTRAHLUNG ZUR HÄRTUNG VON KLEBENÄHTEN**

INTERFERENCE-FREE MICROWAVE RADIATION FOR HARDENING ADHESIVE SEAMS

RAYONNEMENT MICRO-ONDES SANS INTERFERENCE, POUR LE DURCISSEMENT D'UN JOINT D'ADHESIF

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.01.2004 DE 102004004764**

(43) Veröffentlichungstag der Anmeldung:
**11.10.2006 Patentblatt 2006/41**

(73) Patentinhaber: **Sustech GmbH & Co. KG**
**64287 Darmstadt (DE)**

(72) Erfinder:
• **CURA, Elisabeth**
**64283 Darmstadt (DE)**
• **HEMPELMANN, Rolf**
**66386 St. Ingbert (DE)**

• **SCHWEITZER, Heidi**
**64319 Pfungstadt (DE)**
• **SAUER, Hans-Martin**
**64297 Darmstadt (DE)**
• **SPIEKERMANN, Stefan**
**64285 Darmstadt (DE)**

(74) Vertreter: **Kluschanzoff, Harald et al**
**Henkel AG & Co. KGaA**
**VTP Patente**
**40191 Düsseldorf (DE)**

(56) Entgegenhaltungen:
**EP-A- 1 155 798       WO-A-94/20980**
**WO-A-99/24520         DE-A- 10 037 883**
**US-A- 4 684 776       US-A- 4 866 231**

EP 1 709 131 B1

**Beschreibung**

Die vorliegende Erfindung betrifft ein Verfahren zur Fertigung eines Bauteiles, aufweisend zwei zu verbindende Einzel- oder Formteile mit einem sich zwischen den Teilen befindlichen und durch Wärme aushärtbaren Klebstoff, wobei dem Klebstoff eine magnetische Komponente beigegeben ist, wobei zumindest ein Teil des Bauteils, insbesondere die zwischen den Teilen befindliche Klebenaht, zur Wärmebeaufschlagung des Klebstoffs einer polarisierten elektromagnetischen Strahlung, insbesondere im Wellenlängenbereich von Mikrowellen, ausgesetzt wird. Die Erfindung betrifft gleichfalls eine Vorrichtung zur Durchführung des Verfahrens.

Derartige Verfahren zur strahlenunterstützten Aushärtung von Klebstoffen sind bekannt. Insbesondere sind z.B. aus der DE 10 037 883 A1 Verfahren bekannt, bei denen insbesondere mit Nanopartikeln gefüllte Substrate, wie Klebstoff, dadurch erwärmt und damit ausgehärtet werden, dass sie mit Mikrowellen (MW) bestrahlt werden, deren Energie von den Nanopartikeln absorbiert wird. So erhalten mit einem nanoskaligen Ferrit gefüllte Klebstoffe eine gesteigerte Fähigkeit, Mikrowellen zu absorbieren, insbesondere, wenn diese zusätzlich zu der MW-Bestrahlung einem statischen Magnetfeld ausgesetzt werden, das eine Vormagnetisierung der Ferrite bewirkt. Die dadurch ausgerichteten Nanopartikel nehmen ausreichend Energie aus dem Mikrowellenfeld auf, um den Klebstoff zu erhitzen und damit auszuhärten.

Dazu werden bei der Verklebung von Formteilen Mikrowellen entlang einer linearen Klebenaht in einen Mikrowellenleiter, insbesondere einen Hohlleiter oder einen Koaxialleiter, eingespeist, der die Strahlungsenergie an der Klebenaht entlangführt. Der am Ende des Wellenleiters nicht von der Klebenaht absorbierte Anteil der Strahlungsenergie wird zur Energiequelle zurückreflektiert, wobei auf dem Rückweg ein Teil der verbliebenen Strahlung wiederum in Wärme umgesetzt wird. Durch diese Reflexion kommt es jedoch durch die Ausbildung von Interferenzen zu einer unerwünschten Nebenwirkung. Dabei überlagern sich die hin- und rücklaufenden Wellen und bilden eine stehende Welle aus, die sich durch ortsfeste Intensitätsminima und -maxima auszeichnet. Wegen der mit den Minima und Maxima einhergehenden lokalen Schwankungen der Intensität wird die Klebstoffnaht entsprechend unterschiedlich erwärmt.

Dabei wird der Klebstoff in den Intensitätsmaxima stärker erwärmt als in den Intensitätsminima. So kommt es zu einer ungleichmäßigen Aushärtung des Klebstoffs innerhalb der Klebenaht. Besonders kritisch ist es, wenn die Intensität in den Minima nahezu vollständig ausgelöscht ist, Dann kann der Fall eintreten, dass der Klebstoff überhaupt nicht aushärtet, während er in Folge der erhöhten Strahlungsintensität an den Stellen der Interferenzmaxima überhitzt wird und sich zersetzt. Infolge dieses Effektes ist die Klebenaht an viele Stellen geschwächt, wobei der Abstand von Intensitätsmaxima und -minima bei einer Arbeitsfrequenz von 2,45 GHz je nach Wellenleiter 3 bis 5 cm ist. Insbesondere bei der Verklebung von Kunststoffen ist es jedoch im Gegensatz zur Verklebung von Metallteilen wegen der geringen Wärmeleitfähigkeit des Kunststoffs ausgeschlossen, dass sich die Maxima und die Minima der Temperaturverteilung durch Wärmeleitung innerhalb des Bauteils ausgleichen.

Derartige Probleme treten insbesondere dann auf, wenn der Wellenleiter nicht geradlinig, sondern, wie es bei der Verklebung von KFZ-Formteilen normal ist, einer komplizierten Klebenaht mit vielen Bögen, Ecken und Verzweigungen folgt. Dann entstehen die störenden Interferenzen nicht nur durch Wellenreflexion am Ende des Wellenleiters, sondern auch durch Reflexion in den Bögen und Ecken. In diesen Fällen können die entstehenden Interferenzmuster äußerst kompliziert sein und sich schon bei geringfügigen Verformungen des Resonators, etwa beim Anpressen der Formteile in der Klebepresse, stark verändern. Diesem Problem kann auch kaum durch ausgleichende Maßnahmen, wie durch zusätzliche MW-Korrekturelemente, begegnet werden, da nicht nur die Bögen und die Ecken im Wellenleiter, sondern auch die Unregelmäßigkeiten in den Formteilen und in der Klebenaht ähnliche Folgen haben.

Die durch Interferenzen verursachte ungleichmäßige Erwärmung kann zwar teilweise durch die Verwendung von MW-Absorbern, insbesondere durch spezielle Ferrite mit definierter Curie-Temperatur, vermieden werden, so dass Überhitzung in den Intensitätsmaxima weitgehend ausgeschlossen ist; eine Unterversorgung der Klebenaht mit MW-Energie in einem ausgeprägten Interferenzminimum wird dadurch jedoch nicht vermieden. Es ist zwar möglich, durch stärkere Bestrahlung und längere Bestrahlungszeiten die Erwärmung zu verbessern. Durch längere Bestrahlungszeiten geht jedoch der Hauptvorteil der MW-Verklebung, nämlich die sehr rasche und schonende Klebstoffaushärtung, verloren.

Eine andere Möglichkeit, die Folgen der MW-Interferenz für die Klebefestigkeit zu vermeiden, besteht darin, das Interferenzmuster zu variieren. Dazu werden am Ende der MW-Leitung bewegliche Reflektoren einbaut. Diese bewirken, dass sich das Interferenzmuster in gewissen Zeitabständen periodisch hin- und herbewegt, und zumindest bei einer idealen, vollkommen geradlinigen Klebenaht im Verlauf des Bestrahlungszeitraums jede Stelle ausreichend mit Energie versorgt wird. Dieses Verfahren ist allerdings verhältnismäßig aufwendig und funktioniert nicht bei kompliziert geformten Klebenähten mit Bögen und Knicken, da die Reflexion wie erwähnt nicht allein vom Ende der MW-Leitung, sondern auch von den zufälligen Unregelmäßigkeiten in der Klebenaht-Dicke, herrührt.

Aufgabe der vorliegenden Erfindung ist es nunmehr, ein Klebeverfahren, insbesondere eine durch MW-Bestrahlung unterstützte Klebung, speziell im Hinblick auf große Bauteile, wie Karosserieteile, derart zu verbessern, dass bei einfacher Umsetzung des Verfahrens eine möglichst homogene Aushärtung der Klebenähte und damit eine zuverlässige Klebung der Teile gewährleistet ist. Weiterhin ist es Aufgabe der Erfindung, eine einfache und kostengünstige Vorrichtung zur Unterstützung der Aushärtung der Klebenähte zu schaffen, mit der sich bei große Bauteile bearbeiten lassen und die zu einer homogenen Aushärtung der Klebenähte und damit zu stabilen Klebenähten führt.

Diese Aufgaben werden durch das Verfahren nach Anspruch 1 und durch die Vorrichtung nach Anspruch 17 gelöst. Vorteilhafte Ausführungsformen der Erfindung sind in den jeweiligen Unteransprüchen genannt.

Der wesentliche Grundgedanke der Erfindung liegt darin, die Strahlung nicht wie bislang linear sondern stattdessen zirkular zu polarisieren. Diese Vorgehensweise macht sich zunächst den Effekt zu Nutze, dass sich die Richtung der Polarisation bei der Reflexion umkehrt. Dabei wird im Falle der hier beschriebenen Beispiele, die sich vorteilhafterweise eines mit nanoskaligem Ferrit versehenen Klebstoffs bedienen, das magnetische Feld der Strahlung zirkular polarisiert, da dieses vom Klebstoff absorbiert wird und somit zur Aushärtung führt. Wird also eine Klebenaht aus einer Richtung von einer zirkular polarisierten Welle beaufschlagt, dann dreht deren Polarisation anders herum, als die Polarisation der spiegelbildlich zurückreflektierten Welle. Entsprechend der Erfindung wird der Klebstoff mit der darin enthaltenen magnetischen Komponente auf die Richtung der Polarisation sensibilisiert, so dass er nur aus Wellen der einer Polarisationsrichtung Energie absorbieren kann. In diesem Fall kann keine Interferenz innerhalb des Klebstoffs auftreten, so dass es auch nicht zur Ausbildung von Maxima und Minima mit der störenden unterschiedlichen Aushärtung kommt. Die erfindungsgemäße Art der Bestrahlung führt so zu einer über die Klebenaht homogenen Energiezuführung.

Der wesentliche Vorteil des erfindungsgemäßen Vorgehens liegt somit in der Homogenisierung der Wärmebeaufschlagung und damit der Aushärtung. Dieser Vorteil kommt insbesondere bei den Bauteilen zum tragen, die im Verhältnis zur Wellenlänge der eingesetzten Strahlung relativ groß sind. Im Falle der Bestrahlung mit Mikrowellen ist dieses Verfahren gerade für große Bauteile mit Ausmaßen von mehr als 10 cm, wie Karosserieteile, Tragflächen o.ä., besonders zu bevorzugen.

Wie schon erwähnt, lässt sich das erfindungsgemäße Verfahren besonders einfach und damit vorteilhaft einsetzen, wenn dem Klebstoff magnetisierbare Nanopartikel, insbesondere nanoskalige Ferrite (Nanoferrite) als magnetische Komponente beigegeben sind. Solche Ferritzusätze sind hinlänglich bekannt und z.B. in der DE 10 037 883 A1 beschrieben. Dabei haben die Nanoteilchen eine Teilchengröße zwischen 2 nm und 100 nm, wobei eine Teilchengröße von etwa 5 nm zu bevorzugen ist. Die bislang bekannten Nanoferrite können auch für die erfindungsgemäße Beaufschlagung mit zirkular polarisierter Strahlung in vollem Umfang eingesetzt werden. Die durch den Curie-Effekt der Ferrite bedingte Temperaturbegrenzung ist uneingeschränkt wirksam. Gegenüber den Verfahren, die bewegliche Wellenreflektoren nutzen, liegt der Vorteil der Verwendung von Nanoferriten darin, dass keine mechanisch bewegten Elemente im Wellenleiter erforderlich sind. Zudem funktioniert das Verfahren auch bei kompliziert geformten Wellenleitern, bei denen Wellen nicht nur an Wänden des Wellenleiters, sondern auch an Hindernissen und Inhomogenitäten entlang der Klebenaht reflektiert werden.

Im Hinblick auf den Einsatz eines mit solchen Nanoteilchen versehenen Klebers ist es nicht nur besonders vorteilhaft, sondern unabdingbar, dass das Bauteil respektive die Klebenaht während der Bestrahlung zusätzlich einem statischen Magnetfeld ausgesetzt wird, das eine Vormagnetisierung der Nanopartikel verursacht. Dieses Feld einer Stärke bis zu 10 T kann entweder von Permanentmagneten oder von erregten Spulen erzeugt werden, wobei der Einsatz von Elektromagneten zur Erzeugung des Gleichstrom-Magnetfeldes mit einem hohen Energiebedarf einhergeht. Die verwendeten Nanopartikel haben eine Sättigungsmagnetisierung zwischen 20 mT und 2,5 T, insbesondere zwischen 100 mT und 500 mT. Durch das statische Magnetfeld sind die Nanopartikel im Hinblick auf die Absorption der polarisierten Mikrowellen insofern sensibilisiert, als sich die Nanoferrite, die gewissermaßen kleine Kreisel ausbilden, mit ihrem Magnetfeld in eine bestimmte Richtung ausrichten.

Um eine möglichst effektive Beaufschlagung der Klebenaht mit der zirkular polarisierten Komponente des Magnetfeldes zu erhalten ist es besonders vorteilhaft, wenn der Wellenleiter respektive der Resonator eine im Hinblick an die zu verwendende Wellenlänge und den Verlauf der Klebenaht angepasste Geometrie aufweist. So ist es von größtem Vorteil, den Resonator individuell an das zu klebende Bauteil, respektive an die zu beaufschlagende Klebenaht anzupassen. Dabei ist es vorteilhaft, den Wellenleiter so zu konzipieren, dass die Mikrowellenstrahlung im Bereich Klebenaht eine möglichst reine zirkulare Polarisation aufweist. Zudem ist es von entscheidender Bedeutung, dass die Polarisationsebene, also die Ebene, in der der magnetische Feldvektor der MW-Strahlung rotiert, senkrecht auf der Querschnitts-Ebene des Wellenleiters steht. Auch ist vorteilhafterweise die Richtung des statischen Magnetfeldes innerhalb der Klebenaht senkrecht zur Polarisationsebene orientiert.

Letztendlich beruht die Funktionsweise einer vorteilhaften Ausgestaltungsform des Verfahrens auf zwei Besonderheiten betreffend magnetische Nanopartikel und Mikrowellen: So haben Nanopartikel in einem statischen Magnetfeld, das so bemessen ist, dass die Nanopartikel in den Zustand ferromagnetischer Resonanz (FMR) geraten, einen stark ausgeprägten elektromagnetischen Dichroismus. D.h., sie absorbieren ausschließlich die polarisierten Wellen, deren Polarisationsvektor sich in Richtung der Feldlinien des Gleichstrom-Magnetfeldes betrachtet im Uhrzeigersinn (rechtszirkular) dreht. Dahingegen werden linkszirkular polarisierte Wellen nicht absorbiert und durchdringen einen mit Nanoferriten gefüllten Klebstoff ohne Abschwächung und damit ohne zu dessen Erwärmung beizutragen. Zudem werden, wie dargelegt, zirkular polarisierte Wellen, die durch einen Wellenleiter laufen, an dessen Ende oder an einem Hindernis zurückreflektiert und kehren gemäß den Gesetzen des optischen Spiegels ihren Polarisationssinn um, sofern die Polarisationsebene senkrecht auf der Spiegelebene steht. Damit werden hinlaufende Wellen mit rechtszirkularer Polarisation durch die Reflexion zu linkszirkularen zurücklaufenden Wellen und umgekehrt.

Dadurch, dass in der Klebenaht vorhandenen Nanoferrite nur Wellen mit einer der beiden möglichen Polarisationsrichtungen, nicht aber die spiegelbildlich zurückreflektierte Welle absorbieren, tritt keine Interferenzerscheinung auf. Je nach Polung des angelegten Gleichstrom-Magnetfeldes werden entweder nur die hinlaufenden oder nur die rücklaufenden Wellen absorbiert. Auf keinen Fall entstehen jedoch durch Interferenz Maxima und Minima im Temperaturverlauf entlang der Klebenaht. Die MW-Absorption entlang der Klebenaht ist nunmehr gleichmäßig.

Wie schon dargelegt wurde, ist für die beschriebene Energieübertragung auf die Nanoferrite die magnetische Komponente des Mikrowellenfeldes verantwortlich. Hingegen führt die elektrische Komponente des Feldes zu einer dielektrischen Erwärmung, die nicht von den Nanoferriten, sondern von den polaren Bestandteilen des Klebstoffs und der Fügeteile hervorgerufen wird. Im Falle zirkular polarisierter Wellen ist es im Gegensatz zu linearer Polarisation nicht möglich, im Resonator einen Ort zu finden, wo die magnetische Komponente maximal und die elektrische Komponente des Feldes nahezu Null ist, an dem die Klebenaht vorteilhafterweise angeordnet wird. Damit ist es besonders vorteilhaft, andere Vorkehrungen zu treffen, damit die dielektrische Erwärmung nicht die durch die Nanoferrite bedingte intrinsische Temperaturbegrenzung unterlaufen kann. Insbesondere kann durch Verwendung geeigneter Fügeteil-Materialien und/oder geeigneter Klebstoffe sichergestellt werden, dass keine übermäßige dielektrische MW-Absorption in den Fügeteilen auftritt. So sind zahlreiche einfache oder auch glasfaserverstärkte Kunststoffe, zudem Glas und Keramik in Kombination mit Polyurethan- aber auch Epoxid-Klebstoffe sowie "Hotmelts", relativ unempfindlich gegenüber der dielektrischen Erwärmung. Die einseitige, punktweise Verklebung von Metallteilen unter Verwendung zirkularer Wellen ist zwar grundsätzlich durchführbar, jedoch wenig relevant, da bei Punktverklebungen kein Interferenzproblem besteht.

Wegen der hohen Qualität der erfindungsgemäß bestrahlten Klebenaht, stehen die geklebten Bauteile unmittelbar nach der Klebung für die weitere Bearbeitung zur Verfügung, ohne dass lange auf eine vollständige Durchhärtung der Klebenaht gewartet werden müsste. Dadurch kommt es im Rahmen der Fertigung der zu klebenden Bauteile zu einer starken Verkürzung der Taktzeiten und zu einer Reduzierung des Ausschusses.

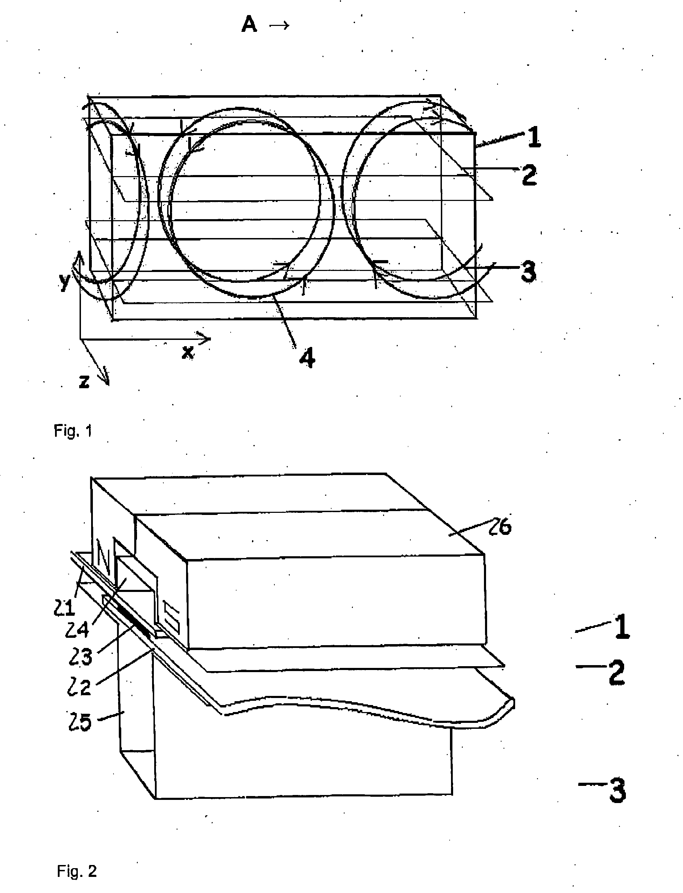

Nachfolgend wird die Erfindung anhand von Ausführungsbeispielen und der Figuren 1 und 2 näher beschrieben. Es zeigen:

Figur 1    einen Rechteck-Wellenleiter mit einer TF-(1,0)-Welle und

Figur 2    einen MW-Wellenleiters zur Nahtverklebung,

Es ist bekannt, dass sich zirkular polarisierte Wellen in vormagnetisiertem ferromagnetischem Material unterschiedlich ausbreiten, bzw. eine unterschiedliche Absorption erfahren. Im Falle eines Rechteck-Wellenleiters, in dem sich eine Welle vom Polarisationstyp TE-(1,0) ausbreitet, ist davon auszugehen, dass für die Ausbreitung der rechtszirkularen und linkszirkularen Wellenanteile folgende Dispersionsrelationen gelten

$$k_\pm^2 + \frac{\pi^2}{b^2} = \frac{1}{c^2}\varepsilon_r\omega^2\left(1 - \frac{C\gamma M_0/4\pi}{\pm\left(\omega - \frac{i}{\tau}\right) - \gamma(H + H_A)}\right)$$

wobei das Vorzeichen (+) jeweils für rechtszirkulare und das Vorzeichen (-) jeweils für linkszirkulare Wellen gilt. Ferner sind mit der Variablen k die Wellenzahl der MW entlang der Klebenaht, mit b die Breite des Rechteck-Wellenleiters, mit c die Lichtgeschwindigkeit von $3\ 10^8$ m/s und mit Er die mittlere Dielektrizitätszahl innerhalb des Wellenleiters bezeichnet, wobei die Dielektrizitätszahl von Fügeteil, Klebstoff und Luft anteilig am Volumenanteil des Wellenleiters gewichtet ist und meist Werte von etwas größer als 1 aufweist. Bekanntermaßen ist $\omega = 2\pi f$ die MW-Kreisfrequenz, wobei in diesem Beispiel mit einer Frequenz von f = 2,45 GHz gearbeitet wird. C ist der Volumenbruchteil des Nanoferrits, der ca, 0,1 % des Gesamtvolumens des Wellenleiters ausmacht. Die Sättigungsmagnetisierung des reinen Ferritmaterials ist mit $M_0$ bezeichnet und liegt im Fall von NiZn-Ferrit bei 280 mT. Weiterhin ist mit $\gamma = 2\pi \times 28$ GHz/T die gyromagnetische Konstante, mit H die Feldstärke des angelegten Gleichstrom-Magnetfeldes, dessen Stärke etwa 70-80 mT beträgt, und mit $H_A$ das Kristallanisotropiefeld des Ferritmaterials von hier 5 bis 20 mT bezeichnet, Die mit $\tau$ bezeichnete Spinrelaxationszeit des Ferrits beträgt typischerweise 3 - 7 ns.

Im Fall der ferromagnetischen Resonanz, d.h. wenn $\gamma(H + H_A) = w$ ist, resultiert aus den Dispersionsrelationen für rechtszirkulare Wellenanteile im Grenzfall C < 0,01 in führender Näherung in C eine Absorptionsrate respektive eine Eindringtiefe (Halbwertslänge L) in den Wellenleiter von

$$L_+ = \frac{1}{\operatorname{Im} k_+} = \frac{16\pi^2 c}{C\gamma M_0 \omega\tau}$$

und für linkssszirkulare Wellen

$$L_- = \frac{1}{\operatorname{Im} k_-} = \frac{16\pi^2 c}{C\gamma M_0}$$

Die Feldamplituden klingen aufgrund der MW-Absorption im Nanoferrit mit dem Exponentialgesetz exp (- x / $L_{+/-}$) mit zunehmender Entfernung x vom Einspeisungspunkt der MW-Energie ab. Allgemein ergibt sich, dass das Verhältnis der Eindringtiefen von links- und rechtszirkularer Wellenanteile in einfacher Weise vom Produkt aus der MW-Kreisfrequenz und der Spinrelaxationszeit abhängt:

$$\frac{L_-}{L_+} = \omega\tau$$

Daraus folgt, dass die rechtszirkularen Wellenanteile um den Faktor $\omega\tau$ stärker absorbiert werden als die linkszirkularen, Das hier beschriebene Verfahren funktioniert daher nur unter der Voraussetzung, dass Ferritmaterialien mit der Eigenschaft $\omega\tau \gg 1$ verwendet werden (siehe Tabelle unten).

Werden für $\tau = 6$ ns und für C = 0,001 im Falle des nanoskaligen Ferritmaterials $Ni_{0,4}Zn_{0,6}Fe_2O_4$ eingesetzt, dann hat die Amplitude der rechtszirkularen Wellenanteile bereits nach 50 cm Laufstrecke um 5 % abgenommen. D.h. 10 % der eingespeisten Energie werden auf den ersten 50 cm des Wellenleiters über die rechtszirkularen Wellenanteile in der Klebenaht in Wärme umgewandelt. Umgekehrt werden demnach die linkszirkularen Wellenanteile erst nach 48 m um 5 % geschwächt. Das bedeutet, dass auf den ersten 50 cm nur 0,1 % in Wärme umgewandelt werden.

Figur 1 zeigt schematisch einen Rechteck-Wellenleiter 1 mit den Schnittebenen $F_1$ 2 und $F_2$ 3. Bei einer innerhalb des Wellenleiters ausgebildeten TE-(1,0)-Welle haben die magnetischen Feldkomponenten die durch 4 angedeutete Gestalt und wandern in horizontaler Richtung durch den Wellenleiter. In diesem Beispiel wandern die rechtszirkularen Wellenanteile (Pfeil A) vom Einspeisungspunkt am linken Ende zum entfernten rechten Ende des Wellenleiters und die linkszirkularen Wellen umgekehrt vom rechten Ende zurück zum Einspeisungspunkt. Somit trägt nur die in Vorwärtsrichtung laufende Welle zur Erwärmung der Klebenaht eines im Resonator befindlichen Bauteiles bei.

Geeignete Nano-Ferrite sind solche, die eine relativ große Spinrelaxationszeit $\omega\tau \gg 1$ aufweisen, Die Bewertung eines Ferritmaterials hinsichtlich seiner Eignung für das erfindungsgemäße Aushärtungsverfahren hängt zudem von der Frequenz ab. Im Allgemeinen sind die Anforderungen bei niedrigeren Frequenzen, z.B. 915 MHz, schärfer als bei hohen Betriebsfrequenzen, z.B. 2,45 GHz oder 5,8 GHz. Allerdings muss beachtet werden, dass auch die Spinrelaxationszeit $\tau$ keine feste Materialkonstante ist, sondern tendenziell mit zunehmender Frequenz langsam abnimmt.

Die Spinrelaxationszeit $\tau$ kann beispielsweise mit einer spektroskopischen Methode bestimmt werden, wobei die MW-Absorption bei konstanter Frequenz als Funktion eines zusätzlich angelegten statischen Magnetfeldes B bestimmt wird. Hierbei können ein oder zwei Absorptionsmaxima beobachtet werden, die der ferromagnetischen Resonanz entsprechen. Die Breite $\Delta B$ der Absorptionsmaxima ist für die Spinrelaxationszeit $\tau$ charakteristisch, dabei gilt: $\tau = 2 / (\gamma \Delta B)$.

In der nachfolgenden Tabelle sind Beispiele für Nano-Ferrite mit deren Parameter dargestellt:

| Nano-Ferrit | Modifizierung | Klebstoff | Sättigungsmagnetisierung des reinen Ferrits ($M_0$) | Spinrelaxationszeit ($\tau$) | $\omega\tau$ bei f = 2,45 GHz |
|---|---|---|---|---|---|
| $Ni_{0,4}Zn_{0,6}Fe_2O_4$ | Ölsäure | Polyurethan | 280 mT | 6,5 ns | 100 |

(fortgesetzt)

| Nano-Ferrit | Modifizierung | Klebstoff | Sättigungsmagnetisierung des reinen Ferrits ($M_0$) | Spinrelaxationszeit ($\tau$) | $\omega\tau$ bei f = 2,45 GHz |
|---|---|---|---|---|---|
| $Mn_{0,7}Zn_{0,3}Fe_2O4$ | Ölsäure | Epoxid | 380 mT | 3,3 ns | 50 |
| $Cu_{0,5}Zn_{0,5}Fe_2O_4$ | Ölsäure | Polyurethan --- | | 2,6 ns | 40 |
| $Fe_3O_4$ | Ölsäure | PE-Hotmelt | 450 mT | 0,8 ns | 12 |
| $Co_{0,2}Zn_{0,8}Fe_2O_4$ | TODS | Polyurethan | --- | 0,1 ns | 1,5 |

Als Anwendungsbeispiel sei die Bestrahlung einer Klebenaht mit zirkular polarisierten Wellen mittels eines aufgeschnittenen Rechteck-Wellenleiters genannt. Dabei wird die Verteilung der elektrischen und magnetischen Felder einer von links nach rechts in Richtung zunehmender x-Koordinate laufenden Welle vom Polarisationstyp TE-(1,0) in einem Rechteck-Wellenleiter 1, wie er in Figur 1 gezeigt ist, mit einer Breite b und einer Höhe h, der sich in x-Richtung erstreckt, wie folgt angegeben ("Theoretische Elektrotechnik" von K. Küpfmüller, Springer-Verlag, Berlin 1973):

$$H_x = (A\,\pi\,/\,b)\,\sin\,(\omega t - kx)\,\cos\,(\pi\,y\,/\,b)$$

$$H_y = A\,k\,\cos\,(\omega t - kx)\,\sin\,(\pi\,y\,/\,b)$$

$$H_z = 0$$

mit $E_x = 0$, $E_y = 0$ und $E_z = A'\sin\,(\omega\tau - kx)\,\sin\,\pi\,/b$.

Die $\gamma$-Achse zeigt wie in Figur 1 angedeutet in die senkrecht zur Wellenleiterachse und die senkrecht zur elektrischen Feldkomponente weisende Richtung, die z-Achse steht ebenfalls senkrecht auf der Wellenleiterachse, steht aber parallel zum elektrischen Feldvektor. Die Amplituden A und A' sind in diesem Fall nicht weiter von Interesse.

Auf der gedachten Schnittfläche $F_1$ 2 durch den Wellenleiter, die in der x-z-Ebene liegt und ihn in Höhe des Wertes $y_1 = (b\,/\,\pi\,\arctan\,(\pi\,/\,k\,b)$ schneidet, haben die Feldkomponenten $H_x$ und $H_y$ die gleiche Amplitude, sind aber in ihrem zeitlichen Verlauf um 90° phasenverschoben. Auf der Schnittfläche $F_1$ ist die durch den Wellenleiter in positive x-Richtung laufende Welle somit vollständig rechtszirkular polarisiert,

In der spiegelbildlich gegenüberliegenden Schnittfläche $F_2$ 3, die in der Höhe des y-Wertes $y_2 = b - y_1$ verläuft, ist die Welle dagegen vollständig linkszirkular polarisiert, Wird die Welle am Ende des Wellenleiters zurückreflektiert, dann liegen die Verhältnisse für die Reflexionswelle genau umgekehrt. Diese Tatsache ist bekannt und beispielsweise beschrieben in Philips Application Note Nr. AN98035, "Circulators and insulators, unique passive devices", Philips Semiconductors, Marketing and sales communication, Building PE-b, P.O. Box 218, 5600 MD Eindhoven, NL.

Wird nun entlang der Schnittfläche $F_1$ eine Klebenaht in den Wellenleiter gelegt, indem er beispielsweise in dieser Höhe der Länge nach aufgeschnitten und die beiden Hälften mittels einer geeigneten mechanischen Vorrichtung (Figur 2) auf beiden Seiten der zu verklebenden Fügeteile 21 und 22 fixiert wird, dann liegen innerhalb der Klebenaht die oben spezifizierten Verhältnisse hinsichtlich der Polarisation der Mikrowellen und der Absorption durch die dem Klebstoff beigemischten Nanoferrite vor. Zusätzlich muss ein Gleichstrom-Magnetfeld angelegt werden, dessen Feldlinien in z-Richtung orientiert sind. Dies kann mittels eines Elektro- oder eines Permanentmagneten 26 geschehen, wobei die Magnetfeldlinien über sie Flanken einer der beiden Wellenleiterhälften 24 und 25 hinweg zur Schnittfläche $F_1$ in die Klebenaht 23 geführt werden müssen, Dies kann z.B. mittels eines Magneten mit U-förmigem Querschnitt erreicht werden.

Figur 2 zeigt eine Ausführungsform eines MW-Wellenleiters zur Verklebung einer Naht. Gezeigt sind das obere Fügeteil 21, das untere Fügeteil 22, der Klebstoff 23, der MW-absorbierende, dichroistische Nanoferrite enthält, sowie eine abnehmbare obere Hälfte 24 des Wellenleiters. Die lichte Höhe ist gleich $y_1$ abzüglich der Dicke des oberen Fügeteils und der halben Dicke der Klebenaht. Die untere Hälfte 25 des Wellenleiters hat die lichte Höhe $b - y_1$ minus der Dicke

des unteren Fügeteils und der halben Dicke der Klebenaht. Zudem ist ein Feldmagnet 26 zur Vormagnetisierung des Nanoferrits dargestellt.

Nachfolgend sind für das Verfahren respektive die Vorrichtung bevorzugte Einstellungen genannt. So sollte die Stärke B des statischen Magnetfeldes zwischen 0,1 mT und 10 T liegen. Ein besonders bevorzugter Bereich ergibt sich aus der Beziehung B [T] = f [GHz] / 28 +/- 20 %. Das Verfahren lässt sich effektiv durchführen mit elektromagnetischer Strahlung der Frequenz zwischen 300 MHz-300 GHz, wobei der Bereich zwischen 500 MHz - 10 GHz, insbesondere zwischen 700 MHz - 3 GHz, zu bevorzugen ist. Als Nanopartikel können Teilchen eingesetzt werden, wie sie in DE 101 63 399 A1 beschrieben sind. Diese sollten eine Größe zwischen 2 nm und 100 nm, bevorzugt zwischen 5 nm und 15 nm aufweisen. Die Spinrelaxationszeit genügt vorzugsweise der Bedingung $\tau > 1/2\pi\, f$ und bei 2,45 GHz gilt $\tau > 0,065$ ns. Besonders zu bevorzugen ist es, wenn $\tau > 15 / 2\pi\, f$ ist und $\tau$ bei 2,45 GHz > 1,0 ns ist.

Weiterhin sollte die zirkulare Polarisation der MW im Klebenahtbereich liegen und dort der Polarisationsgrad mindestens 30 %, vorzugsweise mindestens 60% betragen. Der Winkel zwischen der Polarisationsebene der magnetischen MW-Feldkomponente und der Achse des Wellenleiters sollte größer 45°, vorzugsweise größer 80° sein. Der Winkel zwischen den Feldlinien des zusätzlich angelegten Gleichstrom-Magnetfeldes und der Senkrechten auf der Polarisationsebene sollte kleiner als 45°, bevorzugt kleiner 10° sein.

## Patentansprüche

1. Verfahren zur Fertigung eines Bauteiles, aufweisend zwei zu verbindende aneinanderliegende Einzel- oder Formteile mit einem sich zwischen den Teilen befindlichen und durch Wärme aushärtbaren Klebstoff, wobei dem Klebstoff magnetisierbare Nanopartikel beigegeben sind, wobei zumindest ein Teil des Bauteils, insbesondere die zwischen den Teilen befindliche Klebenaht, zur Wärmebeaufschlagung des Klebstoffs einer polarisierten elektromagnetischen Strahlung, insbesondere im Wellenlängenbereich von Mikrowellen, ausgesetzt wird,
**dadurch gekennzeichnet,**

   a) **dass** das Bauteil mit elektromagnetischer Strahlung beaufschlagt wird, deren magnetische Komponente zirkularer polarisiert ist und
   b) **dass** der Klebstoff mit den darin enthaltenen magnetisierbaren Nanopartikeln bezüglich der Richtung der Polarisation sensibilisiert ist und im wesentlichen nur aus den Wellen einer bestimmten polarisationsrichtung Energie absorbiert sowie
   c) **dass** das Bauteil an der Stelle der Klebenaht während der Bestrahlung einem statischen Magnetfeld ausgesetzt wird, das eine Vormagnetisierung der Nanopartikel verursacht.

2. Verfahren nach Anspruch 1,
**dadurch gekennzeichnet, dass** der Füllstoff magnetisierbare Nanopartikel, insbesondere MW-absorbierende dichroistische nanoskalige Ferrite, aufweist, welche die Absorption der Strahlung begünstigen, wobei die Nanopartikel Teilchengrößen zwischen 2 nm und 100 nm, insbesondere zwischen 5 nm und 15 nm, aufweisen.

3. Verfahren nach einem der vorherigen Ansprüche,
**dadurch gekennzeichnet, dass** die zu beaufschlagenden Teile des Bauteils sich innerhalb eines insbesondere als Resonator ausgebildeten Wellenleiters befinden, dessen Querschnittsgeometrie so ausgebildet ist, dass die Strahlung im Bereich der Klebenaht eine möglichst reine zirkulare Polarisation aufweist.

4. Verfahren nach Anspruch 3,
**dadurch gekennzeichnet, dass** die Ebene, in welcher der magnetische Feldvektor der Strahlung rotiert, senkrecht zur Querschnitts-Ebene des Wellenleiters orientiert wird.

5. Verfahren nach einem der vorherigen Ansprüche,
**dadurch gekennzeichnet, dass** in den Resonator zirkular polarisierte Wellen eingekoppelt werden, wobei innerhalb des Resonators eine Wellenmode, insbesondere die TE-(1,0) Mode, angeregt wird.

6. Verfahren nach Anspruch 1,
**dadurch gekennzeichnet, dass** die Richtung des statischen Magnetfeldes innerhalb der Klebenaht senkrecht zur Polarisationsebene orientiert wird.

7. Verfahren nach Anspruch 6,
**dadurch gekennzeichnet, dass** die Stärke B des statischen Magnetfeldes im Bereich zwischen 0,1 mT und 10 T liegt, wobei sich insbesondere aus der Beziehung B [T] = f [GHz] / 28 +/- 20 % ein besonders bevorzugter Bereich ergibt.

**8.** Verfahren nach einem der vorherigen Ansprüche,
**dadurch gekennzeichnet, dass** die elektromagnetische Strahlung eine Frequenz zwischen 300 MHz und 300 GHz, insbesondere im Bereich zwischen 500 MHz und 10 GHz und besonders bevorzugt im Bereich zwischen 700 MHz und 3 GHz aufweist.

**9.** Verfahren nach einem der vorherigen Ansprüche,
**dadurch gekennzeichnet, dass** die Spinrelaxationszeit größer $1 / 2 \pi f$ ist und dass insbesondere bei einer Mikrowellenstrahlung von 2,45 GHz die Spinrelaxationszeit größer 0,065 ns ist.

**10.** Verfahren nach einem der vorherigen Ansprüche,
**gekennzeichnet durch** Vorkehrungen, die verhindern, dass die dielektrische Erwärmung nicht die **durch** die Nanoferrite bedingte Temperaturbegrenzung unterläuft.

**11.** Verfahren nach Anspruch 10,
**dadurch gekennzeichnet, dass** Fügeteil-Materialien und/oder Klebstoffe verwendet werden, die eine übermäßige dielektrische MW-Absorption in den Fügeteilen verhindern.

**12.** Verfahren nach Anspruch 11,
**dadurch gekennzeichnet, dass** Polyurethan- und/oder Epoxid-Klebstoffe in Kombination mit einfachen Kunststoffen und/oder glasfaserverstärkte Kunststoffen und/oder Glas und/oder Keramik verwendet werden.

**13.** Verfahren nach einem der vorherigen Ansprüche,
**dadurch gekenntzeichnet,** dass Bauteile einer Größe von mehr als 10 cm, insbesondere von mehr als 50 cm bestrahlt werden.

**14.** Verfahren nach einem der vorherigen Ansprüche,
**dadurch gekennzeichnet, dass** die zirkuläre Polarisation der MW im Klebenahtbereich einen Polarisationsgrad von mindestens 30 %, vorzugsweise von mindestens 60 %, aufweist.

**15.** Verfahren nach einem der vorherigen Ansprüche,
**dadurch gekennzeichnet, dass** der Winkel zwischen der Polarisationsebene der magnetischen MW-Feldkomponente und der Achse des Wellenleiters größer als 45°, vorzugsweise größer als 80°, ist.

**16.** Verfahren nach einem der vorherigen Ansprüche,
**dadurch gekenntzeichnet,** dass der Winkel zwischen den Feldlinien des statischen Magnetfeldes und der Senkrechten auf der Polarisationsebene kleiner als 45°, bevorzugt kleiner als 14°, ist.

**17.** Vorrichtung, insbesondere zur Durchführung des Verfahrens nach einem der vorherigen Ansprüche, aufweisend Mittel zur Beaufschlagung eines Bauteils mit Wärme, wobei das Bauteil zu verbindende Formteile mit einer dazwischen angeordneten Klebstoffnaht aufweist, wobei die Klebstoffnaht einen durch Wärme aushärtbaren Klebstoff enthält und wobei das Mittel zur Wärmebeaufschlagung einen Wellenleiter für Mikrowellen aufweist, welcher derart beschaffen ist, dass die über eine Öffnung eingekoppelten Mikrowellen eine zirkulare Polarisation der magnetischen Komponente aufweisen,
**dadurch gekennzeichnet,**

a) **dass** der Wellenleiter ein Rechteck- Wellenleiter ist in dem sich, insbesondere bei einer Arbeitsfrequenz von 2,45 GHz, eine Welle vom Polarisationstyp TE-(1,0) ausbildet, und
b) **dass** der Wellenleiter zwei Hälften aufweist, die sich im zusammengesetzten Zustand um das Bauteil schließen, sowie
c) **dass** die Vorrichtung einen statischen Magneten aufweist, dessen Feldlinien innerhalb des Wellenleiters in z-Richtung orientiert sind.

**18.** Vorrichtung nach Anspruch 17,
**dadurch gekennzeichnet, dass** der Wellenleiter derart an das Bauteil angepasst ist, dass die Klebenaht in der Höhe von $y_1 = (b / \pi \arctan (\pi / k b)$ oder in der Höhe von $y_2 = b - y_1$ verlauft, wobei dort die Feldkomponenten $H_x$

und $H_y$ die gleiche Amplitude aufweisen und in ihrem zeitlichen Verlauf um 90° phasenverschoben sind.

**19.** Vorrichtung nach einem der Ansprüche 17 und 18,
**dadurch gekennzeichnet, dass** die Magnetfeldlinien über die Flanken einer der beiden Wellenleiterhälften hinweg in die Klebenaht geführt werden.

**Claims**

**1.** A method for making a structural component, having two individual or molded parts to be joined together with a heat-hardenable adhesive located between the parts, wherein magnetizable nanoparticles are added to the adhesive, wherein at least one portion of the structural component, in particular the adhesive seam located between the parts, is exposed to polarized electromagnetic radiation, in particular in the wavelength range of microwaves for applying heat to the adhesive,
**characterized in that**

a) electromagnetic radiation is applied to the structural component, the magnetic component of which is circularly polarized, , and
b) that the adhesive with the magnetizable nanoparticles contained therein is sensitized with regards to the direction of the polarization and essentially only absorbs energy from the waves of a certain polarization direction as well as
c) that the structural component is exposed to a static magnetic field at the location of the adhesive seam during the irradiation, which causes pre-magnetization of the nanoparticles.

**2.** The method according to claim 1,
**characterized in that** the filler has magnetizable nanoparticles, in particular microwave-absorbing dichroistic nanoscale ferrites, which promote absorption of the radiation, wherein the nanoparticles have particle sizes between 2 nm and 100 nm, in particular between 5 nm and 15 nm.

**3.** The method according to any of the preceding claims,
**characterized in that** the portions to be irradiated of the structural component are located inside a waveguide, in particular formed as a resonator, the sectional geometry of which is formed in such a way that the radiation in the area of the adhesive seam has a circular polarization as pure as possible.

**4.** The method according to claim 3,
**characterized in that** the plane in which the magnetic field vector of the radiation rotates, is oriented perpendicularly to the sectional plane of the waveguide.

**5.** The method according to any of the preceding claims,
**characterized in that** circularly polarized waves are injected into the resonator, whereby a wave mode, in particular the TE-(1,0) mode, is excited inside the resonator.

**6.** The method according to claim 1,
**characterized in that** the direction of the static magnetic field inside the adhesive seam is oriented perpendicularly to the polarization plane.

**7.** The method according to claim 6,
**characterized in that** the intensity B of the static magnetic field is in the range between 0.1 mT and 10 T, wherein a particularly preferred range is obtained in particular from the relationship $B[T] = f[GHz] / 28 \pm 20\%$.

**8.** The method according to any of the preceding claims,
**characterized in that** the electromagnetic radiation has a frequency between 300 MHz and 300 GHz, in particular in the range between 500 MHz and 10 GHz and more preferably in the range between 700 MHz and 3 GHz.

**9.** The method according to any of the preceding claims,
**characterized in that** the spin relaxation time is larger than $1/2\pi f$ and that in particular for microwave radiation of 2.45 GHz, the spin relaxation time is larger than 0.065 ns.

10. The method according to any of the preceding claims,
    **characterized by** arrangements, which prevent the heating of the dielectric from overreaching the temperature restriction caused by the nanoferrites.

11. The method according to claim 10,
    **characterized in that** the joining part materials and/or adhesives are used, which prevent excessive dielectric microwave absorption in the joining parts.

12. The method according to claim 11,
    **characterized in that** polyurethane and/or epoxide adhesives are used in combination with simple plastics and/or glass fiber reinforced plastics and/or glass and/or ceramic.

13. The method according to any of the preceding claims,
    **characterized in that** structural components with a size greater than 10 cm, in particular greater than 50 cm, are irradiated.

14. The method according to any of the preceding claims,
    **characterized in that** the circular polarization of the microwaves in the area of the adhesive seam has a polarization degree of at least 30%, preferably of at least 60%.

15. The method according to any of the preceding claims,
    **characterized in that** the angle between the polarization plane of the magnetic microwave field component and the axis of the waveguide is larger than 45°, preferably larger than 80°.

16. The method according to any of the preceding claims,
    **characterized in that** the angle between the field lines of the static magnetic field and the normals to the polarization plane is smaller than 45°, preferably smaller than 10°.

17. A device, in particular for carrying out the method according to any of the preceding claims, having means for applying heat to a structural component, wherein the structural component has molded parts to be joined with an adhesive seam positioned in between, wherein the adhesive seam contains a heat-hardenable adhesive and the means for applying heat has a waveguide for microwaves, which is formed in such a way that the microwaves injected via an aperture have circular polarization of the magnetic component,
    **characterized in that**

    a) the waveguide is a rectangular waveguide in which a wave of the TE-(1,0) polarization type is formed in particular at a working frequency of 2.45 GHz, and
    b) the waveguide has two halves which are closed around the structural component in the assembled condition, as well as that
    c) the device has a static magnet, the field lines of which are oriented in the z direction inside the waveguide.

18. The method according to claim 17,
    **characterized in that** the waveguide is fitted to the structural component in such a way that the adhesive seam extends with a height of $y_1 = (b/\pi) \arctan(\pi/kb)$ or with a height of $y_2 = b - y_1$, wherein the field components $H_x$ and $H_y$ have the same amplitude therein and are phase shifted by 90° in their time course.

19. The device according to any of claims 17 and 18,
    **characterized in that** the magnetic field lines are led away into the adhesive seam via the flanks of one of the two waveguide halves.

**Revendications**

1. Procédé pour la fabrication d'un élément de construction présentant deux éléments individuels ou deux éléments moulés adjacents l'un à l'autre, qui doivent être reliés, et comprenant un adhésif disposé entre les éléments et qui est durcissable sous l'effet de la chaleur, des nanoparticules magnétisables ayant été ajoutées à l'adhésif, dans lequel au moins une partie de l'élément de construction, en particulier la soudure par collage qui se trouve entre les deux éléments, est exposée, pour la sollicitation thermique de l'adhésif, à un rayonnement électromagnétique polarisé, en particulier dans le domaine des longueurs d'ondes des micro-ondes, **caractérisé**

a) **en ce que** l'élément de construction est sollicité avec un rayonnement électromagnétique dont le composant magnétique est soumis à une polarisation circulaire; et
b) **en ce que** l'adhésif contenant des nanoparticules magnétisables est sensibilisé dans la direction de la polarisation et, de manière essentielle, n'absorbe de l'énergie qu'à partir des ondes possédant une direction de polarisation déterminée; et également
c) **en ce que** l'élément de construction, à l'endroit de la soudure par collage, est exposé, au cours de l'irradiation, à un champ magnétique statique qui donne lieu à une magnétisation préalable des nanoparticules.

2. Procédé selon la revendication 1,
**caractérisé en ce que** la substance de charge présente des nanoparticules magnétisables, en particulier des ferrites dichroïques à l'échelle du nanomètre absorbant les micro-ondes, qui favorise l'absorption du rayonnement, les nanoparticules présentant des granulométries entre 2 nm et 100 nm, en particulier entre 5 nm et 15 nm.

3. Procédé selon l'une quelconque des revendications précédentes,
**caractérisé en ce que** les parties à solliciter de l'élément de construction se trouvent à l'intérieur d'un guide d'ondes réalisées en particulier sous la forme d'un résonateur, dont la géométrie en section transversale est mise en oeuvre de telle sorte que le rayonnement présente, dans la zone de la soudure par collage, une polarisation circulaire la plus pure possible.

4. Procédé selon la revendication 3,
**caractérisé en ce que** le plan, dans lequel le vecteur de champ magnétique du rayonnement effectue des rotations, est orienté perpendiculairement au plan en section transversale du guide d'ondes.

5. Procédé selon l'une quelconque des revendications précédentes,
**caractérisé en ce que** des ondes soumises à une polarisation circulaire sont introduites dans le résonateur par couplage, un mode d'onde étant excité au sein du résonateur, en particulier le mode TE-(1,0).

6. Procédé selon la revendication 1,
**caractérisé en ce que** la direction du champ magnétique statique au sein de la soudure par collage est orientée perpendiculairement au plan de polarisation.

7. Procédé selon la revendication 6,
**caractérisé en ce que** la force B du champ magnétique statique se situe dans la plage entre 0,1 mT et 10 T, une plage particulièrement préférée étant obtenue en particulier à partir de l'équation B [T] = f [GHz] / 28 +/-20%.

8. Procédé selon l'une quelconque des revendications précédentes,
**caractérisé en ce que** le rayonnement électromagnétique présente une fréquence entre 300 MHz et 300 GHz, en particulier dans la plage entre 500 MHz et 10 GHz et de manière particulièrement préférée dans la plage entre 700 MHz et 3 GHz.

9. Procédé selon l'une quelconque des revendications précédentes,
**caractérisé en ce que** le temps de relaxation du spin est supérieur à $1/2 \pi f$ et **en ce que**, en particulier à un rayonnement de micro-ondes de 2,45 GHz, le temps de relaxation du spin est supérieur à 0,065 ns.

10. Procédé selon l'une quelconque des revendications précédentes,
**caractérisé par** des mesures qui empêchent le réchauffement diélectrique de franchir vers le bas la limitation de température requise par les nanoferrites.

11. Procédé selon la revendication 10,
**caractérisé en ce que** l'on utilise des matières de parties à joindre par collage et/ou des adhésifs qui empêchent une absorption diélectrique excessive dans la plage des micro-ondes dans les parties à joindre.

12. Procédé selon la revendication 11,
**caractérisé en ce qu'**on utilise des adhésifs à base de polyuréthane et/ou d'époxydes en combinaison avec des adhésifs simples et/ou des adhésifs renforcés par des fibres de verre et/ou du verre et/ou de la céramique.

**13.** Procédé selon l'une quelconque des revendications précédentes,
**caractérisé en ce qu'**on expose à un rayonnement, des éléments de construction dont la dimension est supérieure à 10 cm, en particulier supérieure à 50 cm.

**14.** Procédé selon l'une quelconque des revendications précédentes,
**caractérisé en ce que** la polarisation circulaire des micro-ondes dans la région de la soudure par collage présente un degré de polarisation d'au moins 30 %, de préférence d'au moins 60 %.

**15.** Procédé selon l'une quelconque des revendications précédentes,
**caractérisé en ce que** l'angle formé entre le plan de polarisation du composant de champ magnétique dans le domaine des micro-ondes et l'axe du guide d'ondes est supérieur à 45°, de préférence supérieur à 80°.

**16.** Procédé selon l'une quelconque des revendications précédentes,
**caractérisé en ce que** l'angle formé entre les lignes de champ du champ magnétique statique et la perpendiculaire au plan de polarisation est inférieur à 45°, de préférence inférieur à 10°.

**17.** Dispositif, en particulier pour la mise en oeuvre du procédé selon l'une quelconque des revendications précédentes, présentant des moyens pour la sollicitation d'un élément de construction avec de la chaleur, l'élément de construction présentant des éléments moulés à relier, entre lesquels vient se disposer une soudure par adhésif, la soudure par adhésif présentant un adhésif thermodurcissable et l'agent, pour la sollicitation thermique, présentant un guide d'ondes pour des micro-ondes, possédant une nature telle que les micro-ondes introduites par couplage via une ouverture présentent une polarisation circulaire du composant magnétique,
**caractérisé**

    a) **en ce que** le guide d'ondes est un guide d'ondes rectangulaire dans lequel on obtient, à une fréquence de travail de 2,45 GHz, une onde dont le type de polarisation est TE-(1,0); et
    b) **en ce que** le guide d'ondes présente deux moitiés qui se referment autour de l'élément de construction à l'état assemblé, et également
    c) **en ce que** le dispositif présente un aimant statique dont les lignes de champ intérieur du conducteur d'ondes sont orientées dans la direction z.

**18.** Dispositif selon la revendication 17,
**caractérisé en ce que** le guide d'ondes est adapté à l'élément de construction de telle sorte que la soudure par collage s'étend à une hauteur de $y_1 = (b /\pi \arctan (\pi / k\, b)$ ou à une hauteur de $y_2 = b - y_1$, les composants de champ $H_x$ et $H_y$ présentant la même amplitude et manifestant un décalage de phase de 90° dans leur allure temporelle.

**19.** Dispositif selon l'une quelconque des revendications 17 et 18,
**caractérisé en ce que** les lignes du champ magnétique sont guidées au-delà des flancs d'une des deux moitiés du guide d'ondes, dans la soudure par collage.

A →

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10037883 A1

- DE 10163399 A1

**In der Beschreibung aufgeführte Nicht-Patentliteratur**

- **K. KÜPFMÜLLER.** Theoretische Elektrotechnik. Springer-Verlag, 1973